(19) **Europäisches Patentamt / European Patent Office / Office européen des brevets**

(11) **EP 3 757 942 B1**

(12) **FASCICULE DE BREVET EUROPEEN**

(45) Date de publication et mention
de la délivrance du brevet:
**12.02.2025 Bulletin 2025/07**

(21) Numéro de dépôt: **20176380.2**

(22) Date de dépôt: **25.05.2020**

(51) Classification Internationale des Brevets (IPC):
**G06T 7/70** (2017.01)

(52) Classification Coopérative des Brevets (CPC):
**G06T 7/70;** G06T 2207/10004; G06T 2207/30212

(54) **PROCÉDÉ ET DISPOSITIF DE TÉLÉMÉTRIE PASSIVE PAR TRAITEMENT D'IMAGE**

VERFAHREN UND VORRICHTUNG ZUR PASSIVEN TELEMETRIE DURCH BILDVERARBEITUNG

METHOD AND DEVICE FOR PASSIVE TELEMETRY BY IMAGE PROCESSING

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **26.06.2019 FR 1906853**

(43) Date de publication de la demande:
**30.12.2020 Bulletin 2020/53**

(73) Titulaire: **MBDA France**
**92350 Le Plessis-Robinson (FR)**

(72) Inventeur: **DORBESSAN, Paul**
**92350 Le Plessis-Robinson (FR)**

(74) Mandataire: **Gevers & Orès**
**Immeuble le Palatin 2**
**3 Cours du Triangle**
**CS 80165**
**92939 Paris La Défense Cedex (FR)**

(56) Documents cités:
**CN-A- 109 215 073 US-A1- 2019 005 681**

- **ARSALAN MOUSAVIAN ET AL: "3D Bounding Box Estimation Using Deep Learning and Geometry", ARXIV.ORG, CORNELL UNIVERSITY LIBRARY, 201 OLIN LIBRARY CORNELL UNIVERSITY ITHACA, NY 14853, 1 December 2016 (2016-12-01), XP080736198, DOI: 10.1109/ CVPR.2017.597**
- **FLORIAN CHABOT ET AL: "Deep MANTA: A Coarse-to-fine Many-Task Network for joint 2D and 3D vehicle analysis from monocular image", ARXIV.ORG, CORNELL UNIVERSITY LIBRARY, 201 OLIN LIBRARY CORNELL UNIVERSITY ITHACA, NY 14853, 22 March 2017 (2017-03-22), XP080758871, DOI: 10.1109/CVPR.2017.198**
- **ROSEBROCK ADRIAN: "Find distance from camera to object using Python and OpenCV", 19 January 2015 (2015-01-19), pages 1 - 111, XP055925999, Retrieved from the Internet <URL:https://pyimagesearch. com/2015/01/19/find-distance-camera-objectmar ker-using-python-opencv/> [retrieved on 20220530]**

EP 3 757 942 B1

## Description

## DOMAINE TECHNIQUE

La présente invention concerne un procédé et dispositif d'estimation de distance (ou de télémétrie) entre un observateur et une cible, à l'aide d'au moins une image générée par un générateur d'images numérique.

Bien que non exclusivement, la présente invention s'applique plus particulièrement au domaine militaire. Dans le domaine militaire, l'estimation de la distance d'une cible ou d'une menace (par rapport à l'observateur) est très importante. Elle présente un intérêt notamment :

- pour le renseignement tactique (position relative d'une cible par rapport à l'observateur) ;
- pour la progression (maintien d'une distance de sécurité) ; et
- pour l'engagement d'une munition (tirs d'obus ou de missiles).

## ÉTAT DE LA TECHNIQUE

Dans le cadre de la présente invention, on entend par cible tout objet, par exemple un bâtiment ou un engin, ou tout autre élément, dont on veut mesurer la distance.

On connaît différents systèmes, basés sur des technologies différentes et variées, pour mesurer la distance entre un observateur et une cible, c'est-à-dire entre la position de l'observateur et celle de la cible.

On connaît notamment des méthodes fondées sur l'analyse d'un signal lumineux émis par l'observateur et réfléchi par la cible observée. Une telle méthode existe dans des systèmes actifs tels qu'un télémètre laser, un scanner 3D, un lidar ou encore des caméras temps de vol. La mesure de distance est réalisée par différentes analyses, mises en œuvre dans ces systèmes, telles que la mesure de retard de l'écho du signal émis, la mesure du décalage de phase entre les signaux émis et réfléchis, la mesure d'une modulation de fréquence, et la mesure de la décroissance de l'intensité du signal réfléchi.

Toutes les méthodes actives présentent des inconvénients en termes de furtivité. En effet, elles nécessitent l'émission d'un rayonnement électromagnétique vers la cible observée. Ce rayonnement est détectable, ce qui n'est pas souhaitable dans certaines applications. De plus, elle nécessite des équipements actifs spécifiques, susceptibles de présenter un coût élevé.

Il existe également des méthodes passives, en particulier des méthodes par focalisation d'un imageur de faible profondeur de champ. Une telle méthode exige un matériel spécifique qui est mal adapté à d'autres usages qui pourraient être envisagés avec le même dispositif optique, tels que l'observation ou la surveillance d'une zone.

D'autres méthodes passives à base de triangulation présentent également des inconvénients. Un dispositif usuel utilise en général deux imageurs, ce qui pose des problèmes en termes de coût et d'encombrement. De plus, la performance est directement liée à l'écartement entre les deux imageurs, ce qui est particulièrement défavorable à l'encombrement. Une variante avec un seul imageur en mouvement demande à l'observateur de se déplacer, ce qui n'est pas toujours possible.

Par ailleurs, on connaît par un article intitulé « 3D Bounding Box Estimation Using Deep Learning and Geometry » de Arsalan Mousavian ET AL, ARXIV.ORG, CORNELL UNIVERSITY LIBRARY (1 Décembre 2016), une méthode permettant de détecter un objet dans une image et d'en estimer l'orientation en trois dimensions. Cette méthode consiste notamment à déterminer, dans l'image, une boîte englobante en trois dimensions contenant l'objet détecté.

De plus, on connaît, par un article intitulé « Deep MANTA : A Coarse-to-fine Many Task Network for joint 2D and 3D vehicle analysis from monacular image » de Florian Chabot ET AL, ARXIV.ORG, CORNELL UNIVERSITY LIBRARY (22 Mars 2017), une méthode visant à détecter et localiser simultanément plusieurs véhicules dans une image. Cette méthode comprend une estimation de l'orientation des véhicules en trois dimensions ainsi qu'une localisation des parties potentielles parties cachées des véhicules.

On connait également, par le document US 2019/005681, une méthode pour régler une caméra, en particulier une caméra de surveillance. Cette méthode consiste à prendre une image d'un objet de référence afin de détecter cet objet dans l'image et de déduire ses dimensions dans l'image à partir de données préenregistrées concernant les dimensions réelles de l'objet de référence de manière à obtenir une échelle dimensionnelle pour l'image.

Par ailleurs, on trouve sur le site internet « pyimagesearch .com », un article intitulé « Find distance from camera to abject using Python and OpenCV » de ROSEBROCK Adrian (https://pyimagesearch.com/2015/01 /19/find-distance-camera-objectmarker-using-pythonopencv/) dans lequel une solution est proposée pour calculer la distance entre une caméra et un objet à l'aide d'un marqueur, dans l'image, dont on connaît les dimensions.

Ces solutions usuelles ne sont donc pas complètement satisfaisantes.

La présente invention a pour objet de proposer une mesure de distance (ou télémétrie) passive, particulièrement avantageuse.

## EXPOSÉ DE L'INVENTION

La présente invention concerne un procédé d'estimation de distance entre une position d'un observateur et une cible, à l'aide d'au moins une image générée par un générateur d'images numérique (ou imageur numérique ou caméra numérique) à partir de la position de l'observateur, qui permet de remédier aux inconvénients précités.

L'invention comprend un procédé d'estimation de distance selon la revendication 1.

Ainsi, grâce à l'invention, on obtient un procédé permettant d'estimer, de façon automatique et sans contact, la distance séparant un objet (cible) et un observateur, sans que ce dernier ait à se déplacer, et ceci au moyen d'un système optique (générateur d'images) qui est passif, c'est-à-dire qui n'émet pas d'ondes électromagnétiques en direction de la cible pour interagir avec elle.

L'étape de détection et d'identification comprend :

- une sous-étape de détection consistant à détecter une cible dans l'image ; et
- une sous-étape de reconnaissance et d'identification consistant à attribuer à la cible détectée une classe. De préférence, ladite classe est l'une des classes suivantes : une classe de reconnaissance, une classe d'identification. L'attribution d'une classe correspond à la détermination d'une catégorie ; si cette catégorie est générique (par exemple, un camion ou un char) on parle de reconnaissance et quand elle permet d'identifier un modèle précis de l'objet (par exemple un modèle particulier de char) on parle d'identification.

Avantageusement, la sous-étape de détection consiste à réaliser l'une des opérations suivantes sur l'image : identifier les pixels de la cible, identifier les pixels du contour de la cible, générer une boîte englobante englobant la cible.

De plus, de façon avantageuse, l'étape de détection et d'identification met en œuvre un apprentissage automatique utilisant des modèles de classification. On pourra utiliser avantageusement (mais pas nécessairement et de façon indépendante des modèles d'identification) une technique par apprentissage pour la détection. Avantageusement, le procédé comprend au moins une première étape d'apprentissage, mise en œuvre antérieurement à l'étape de détection et d'identification, consistant à générer lesdits modèles de classification.

Par ailleurs, dans un premier mode de réalisation, l'étape d'estimation d'orientation consiste à comparer la cible à des modèles de cible prédéterminés (de cibles connues), tandis que, dans un second mode de réalisation, l'étape d'estimation d'orientation consiste à mettre en œuvre une méthode d'estimation fondée sur une régression non linéaire. Dans ce second mode de réalisation, le procédé comprend au moins une seconde étape d'apprentissage, mise en œuvre antérieurement à l'étape d'estimation d'orientation, consistant à générer au moins un modèle de régression non linéaire.

Pour estimer l'orientation de la cible, on utilise des modèles construits antérieurement à la mission à partir de connaissances sur les cibles connues prises en compte par le dispositif. L'utilisation de régressions non linéaires apprises par apprentissage (second mode de réalisation) est une manière d'utiliser des modèles. L'utilisation de modèles géométriques en 3D (premier mode de réalisation) est une autre manière. Dans le second mode de réalisation les modèles sont appris par apprentissage, et dans le premier mode de réalisation les modèles sont construits par une procédure manuelle (qui peut comprendre des opérations automatiques mais pas à base d'apprentissage).

En outre, dans un mode de réalisation particulier, au moins l'une desdites première et seconde étapes d'apprentissage met en œuvre l'un des algorithmes suivants :

- au moins un algorithme de machine à vecteurs de support ;
- au moins un algorithme à base de forêt d'arbres décisionnels ;
- au moins un réseau de neurones à convolution.

On peut utiliser une technique d'apprentissage automatique indépendamment pour la détection, la reconnaissance, l'identification et l'estimation d'orientation.

Dans le cadre de la présente invention, les apprentissages automatiques de modèles de classification (en détection, en reconnaissance et en identification) ou de modèles de régression (sur l'orientation des objets) sont réalisés sur des bases d'objets connus.

Par ailleurs, la sous-étape de calcul consiste à calculer la distance D entre la position de l'observateur et la cible à l'aide de l'expression suivante :

$$D = dm/(dp.\theta)$$

dans laquelle :

- dm représente une longueur apparente du segment caractéristique, correspondant à la longueur réelle du segment caractéristique (mesurée de préférence en mètres dans la scène) en tenant compte de l'orientation de la cible ;
- dp représente la longueur mesurée (de préférence en nombre de pixels) sur l'image du segment caractéristique ; et
- $\theta$ représente la résolution spatiale du générateur d'images numérique.

En outre, dans un mode de réalisation particulier, le procédé comprend, de plus, au moins l'une des étapes suivantes :

- une étape de génération d'image, mise en œuvre antérieurement à l'étape de détection et d'identification, consistant à générer au moins une image à l'aide du générateur d'images à partir de la position de l'observateur ;

- une étape de transmission d'informations, mise en œuvre postérieurement à l'étape d'estimation de distance, consistant à transmettre au moins la distance estimée à au moins un système utilisateur.

Par ailleurs, dans un premier mode de réalisation, l'étape de détection et d'identification et l'étape d'estimation d'orientation sont deux étapes séparées, mises en œuvre successivement, tandis que, dans un second mode de réalisation, l'étape de détection et d'identification et l'étape d'estimation d'orientation sont mises en œuvre en une seule et même étape (dite de détection, d'identification et d'orientation). Lorsque l'on envisage la détection, l'identification et l'orientation simultanément, la réalisation possible prévoit d'utiliser des modèles construits par apprentissage automatique consistant à détecter et identifier à la fois le modèle de cible et l'orientation simultanément (par exemple, en utilisant un modèle permettant d'extraire de l'image les chars d'un modèle donné de face, les camions d'un modèle donné de profil,...).

Le procédé peut être mis en œuvre de deux façons différentes. Plus précisément :

- dans un premier mode de réalisation, il est mis en œuvre de façon (complètement) automatique ; et
- dans un second mode de réalisation, l'étape de détection et d'identification et l'étape d'estimation d'orientation sont mises en œuvre de façon semi-automatique (avec une intervention d'un opérateur), et l'étape d'estimation de distance est mise en œuvre de façon automatique.

Dans ce second mode de réalisation, on envisage que l'opérateur puisse intervenir de façon indépendante sur la segmentation de l'objet, sur la classe d'identification de l'objet et sur l'orientation, à l'aide d'une interface homme/machine (par exemple un logiciel avec une interface graphique mise en œuvre sur un écran tactile ou avec un curseur). Par exemple, l'opérateur aide le dispositif à dessiner les contours de l'objet, ou il renseigne le type d'objet qu'il a extrait de l'image (par exemple un char d'un type donné), ou bien il informe le dispositif que le char observé est de face ou de profil.

La présente invention concerne également un dispositif d'estimation de distance entre une position d'un observateur et une cible, selon la revendication 14.

En outre, dans un mode de réalisation particulier, ledit dispositif comporte également au moins l'un des éléments suivants :

- au moins une base de données prédéterminée contenant au moins ladite liste de cibles connues ;
- le générateur d'images numérique configuré pour générer au moins une image à partir de la position de l'observateur ;

- une unité de transmission d'informations configurée pour transmettre au moins la distance estimée à au moins un système utilisateur.

## BRÈVE DESCRIPTION DES FIGURES

Les figures du dessin annexé feront bien comprendre comment l'invention peut être réalisée. Sur ces figures, des références identiques désignent des éléments semblables.

La figure 1 est le schéma synoptique d'un dispositif d'estimation de distance qui illustre un mode de réalisation particulier de l'invention.
La figure 2 montre une application particulière d'une mesure de distance d'une cible.
La figure 3 illustre un premier exemple d'identification d'une cible sur une image.
La figure 4 illustre un second exemple d'identification d'une cible sur une image.
La figure 5 est le schéma synoptique d'un procédé d'estimation de distance de cible.
La figure 6 est le schéma synoptique d'un apprentissage supervisé de modèles de classification.
La figure 7 est le schéma synoptique d'un apprentissage supervisé de modèles d'estimation d'orientation de cibles connues.
La figure 8 montre schématiquement un mode de calcul de distance.

## DESCRIPTION DÉTAILLÉE

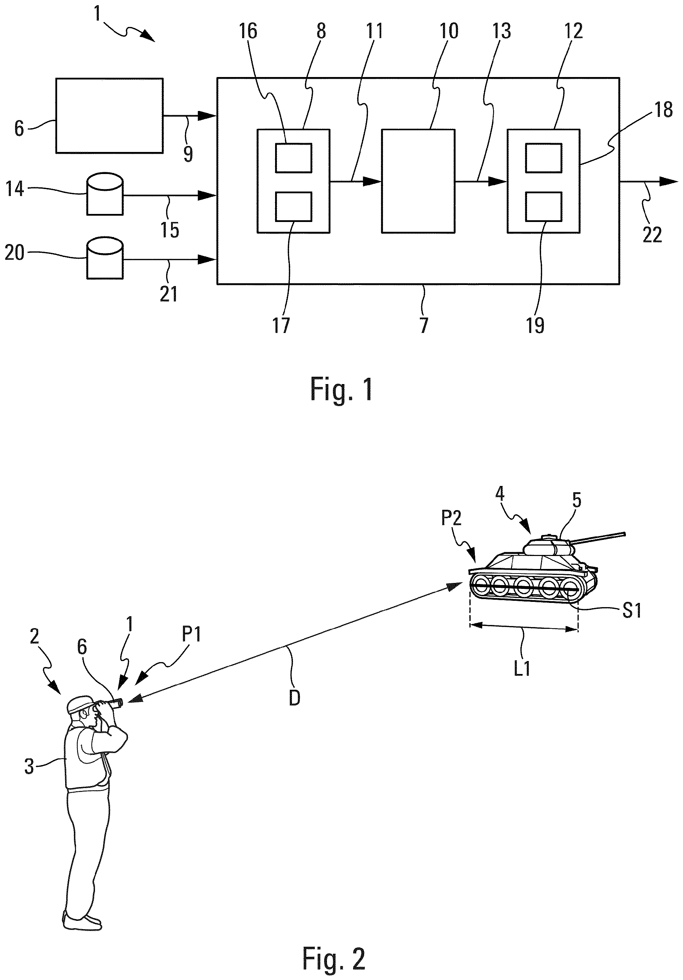

Le dispositif d'estimation de distance 1 (ci-après « dispositif ») représenté schématiquement sur la figure 1 et permettant d'illustrer l'invention, est destiné au moins à estimer la distance entre une position d'un observateur et une position d'une cible. L'observateur est, de préférence, un être humain, mais il peut également correspondre à un système technique qui comprend notamment un générateur d'images numérique.

On entend par cible 4 tout objet, par exemple un bâtiment ou un engin mobile ou non, ou tout autre élément, dont on veut mesurer la distance (par rapport à l'observateur 2). Sur l'exemple de la figure 2, illustrant une application particulière, l'observateur 2 est un militaire 3 et la cible 4 est un char 5. Bien qu'il soit particulièrement approprié au domaine militaire, le dispositif 1 peut également être utilisé dans le domaine civil.

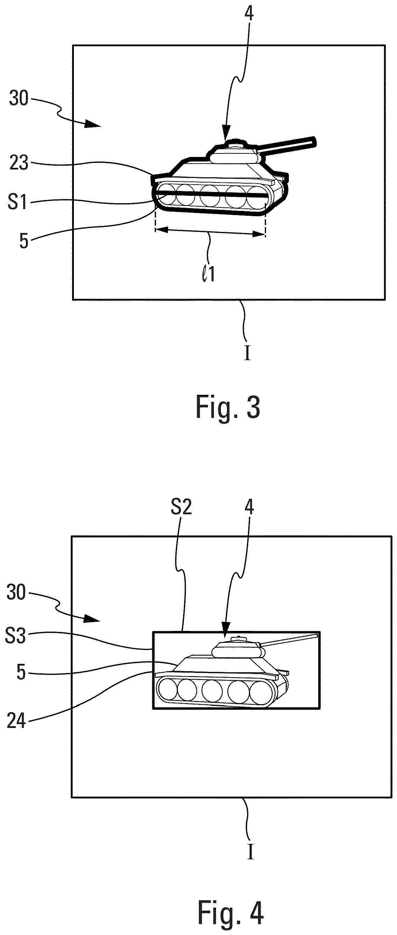

Le dispositif 1 est destiné à estimer la distance à l'aide d'au moins une image I (figures 3 et 4) numérique générée par un générateur d'images 6 (ou imageur ou caméra) numérique à partir de la position de l'observateur, en mettant en œuvre notamment un traitement de cette image I. Le générateur d'images 6 qui a pris l'image peut être actionné par l'observateur ou bien par une autre personne ou par un système approprié.

Plus précisément, le dispositif 1 est destiné à estimer la distance D entre la position P1 courante de l'observateur 2 (à partir de laquelle a été prise l'image I) et la position P2 courante de la cible 4, comme montré sur la figure 2. On entend par, positions courantes P1 et P2, les positions géographiques de l'observateur 2 et de la cible 4 au moment de la prise de l'image (utilisée pour l'estimation) par le générateur d'images 6.

Dans le cadre de la présente invention, l'observateur 2 et/ou la cible 4 n'ont pas besoin d'être mobiles pour mettre en œuvre l'estimation de distance. Toutefois, l'observateur 2 peut être mobile ou fixe, et la cible 4 peut être mobile ou fixe, pour la mise en œuvre de la présente invention.

Le dispositif 1 comporte, comme représenté sur la figure 1, une unité centrale 7 qui comprend :

- une unité de détection et d'identification 8 configurée pour détecter et identifier au moins une cible 4 dans l'image I (reçue du générateur d'images 6 via une liaison 9), à partir au moins d'une liste (prédéterminée) de cibles (ou objets) connues ;
- une unité d'estimation d'orientation 10 reliée par l'intermédiaire d'une liaison 11 à l'unité de détection et d'identification 8 et configurée pour déterminer l'orientation de la cible 4 identifiée dans l'image I ; et
- une unité d'estimation de distance 12 reliée par l'intermédiaire d'une liaison 13 à l'unité d'estimation d'orientation 10.

Le dispositif 1 comporte, de plus, au moins une base de données 14 prédéterminée, contenant au moins ladite liste prédéterminée de cibles connues. Dans un mode de réalisation particulier, le dispositif 1 comporte un ensemble (non représenté) d'une pluralité de bases de données 14, dont une seule est représentée sur la figure 1, comprenant par exemple respectivement des types de cibles différents.

Les cibles connues peuvent être différentes versions ou différents modèles d'un même type d'engin ou objet recherché, par exemple d'un engin mobile, notamment terrestre, tel qu'un char, un camion militaire ou autre. Il peut également s'agir de différents types de cibles (char, véhicule de transport, ...).

Dans un premier mode de réalisation représenté sur la figure 1, la base de données 14 ou l'ensemble de bases de données 14 peut être agencé à l'extérieur de l'unité centrale 7 et être relié à cette dernière par l'intermédiaire d'une liaison 15. En outre, dans un second mode de réalisation (non représenté), la base de données ou l'ensemble de bases de données est intégré dans l'unité centrale 7.

Le dispositif 1 comporte, de plus, au moins une base de données 20 prédéterminée, contenant d'autres informations prédéterminées précisées ci-dessous. Dans un mode de réalisation particulier, le dispositif 1 comporte un ensemble (non représenté) d'une pluralité de bases de données 20, dont une seule est représentée sur la figure 1.

Dans un premier mode de réalisation représenté sur la figure 1, la base de données 20 ou l'ensemble de bases de données 20 peut être agencé à l'extérieur de l'unité centrale 7 et être relié à cette dernière par l'intermédiaire d'une liaison 21. En outre, dans un second mode de réalisation (non représenté), la base de données ou l'ensemble de bases de données est intégré dans l'unité centrale 7.

Dans une variante de réalisation, le dispositif 1 comprend une seule base de données (non représentée), et les données des bases de données 14 et 20 sont intégrées dans cette seule et même base de données.

Dans un mode de réalisation préféré, l'unité de détection et d'identification 8 comprend :

- une unité de détection 16 configurée pour détecter une cible 4 dans l'image I ; et
- une unité de reconnaissance et d'identification 17 configurée pour attribuer à la cible détectée une classe.

L'unité de détection et d'identification 8 comprend, ainsi, une chaîne de traitement de type DRI (pour « Détection, Reconnaissance et Identification ») qui a pour fonction de détecter et localiser, ainsi que d'identifier les objets (ou cibles) de la base de données 14 qui sont éventuellement présents dans l'image I.

En outre, l'unité d'estimation de distance 12 comporte :

- un élément de mesure 18 configuré pour mesurer sur l'image I la longueur d'un segment caractéristique S1, S2, S3 (figures 3 et 4) de la cible 4, tel que précisé ci-dessous ; et
- un élément de calcul 19 configuré pour calculer la distance D, à partir à la fois de ladite longueur mesurée par l'élément de mesure 18, d'une longueur réelle du segment S1, S2, S3 sur la cible 4 en tenant compte de l'orientation de la cible 4 et de la résolution spatiale du générateur d'images 6.

En outre, dans un mode de réalisation particulier, ledit dispositif 1 comporte également le générateur d'images 6 qui est donc configuré pour générer au moins une image I à partir de la position P1 de l'observateur 2.

Dans un mode de réalisation préféré, le générateur d'images 6 est un imageur optoélectronique, par exemple une caméra RVB (pour « Rouge, Vert, Bleu » ou « RGB » en anglais pour « Red, Green, Blue ») ou une caméra infrarouge.

Par ailleurs, dans un mode de réalisation particulier, ledit dispositif 1 comporte une unité de transmission d'informations (non représentée) qui est configurée pour transmettre au moins la distance D estimée (ainsi que l'identité de la cible par exemple) à au moins un système utilisateur (non représenté) via une liaison 22 (figure 1).

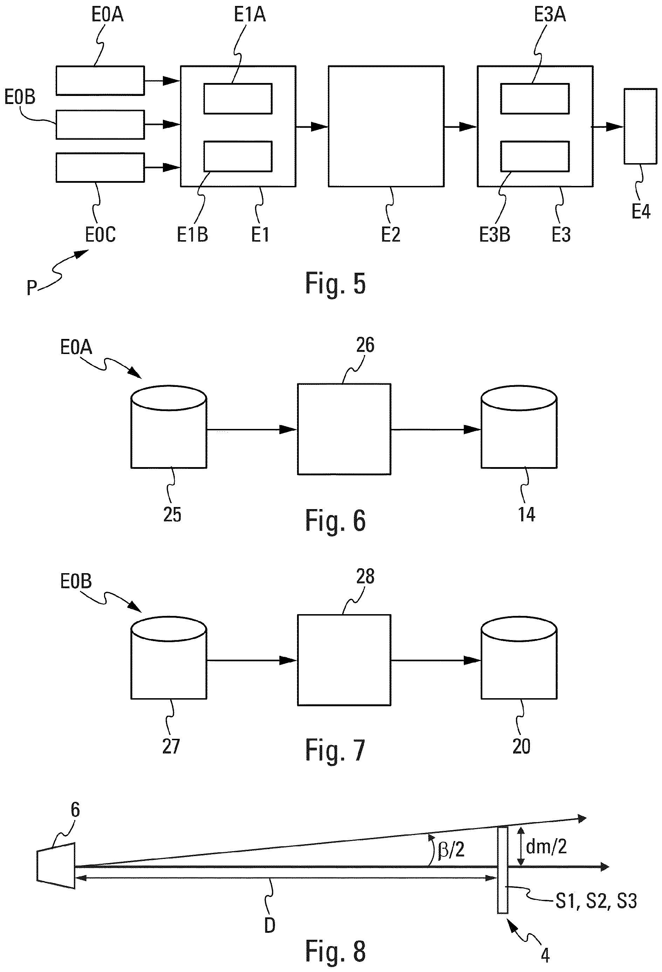

Le dispositif 1, tel que décrit ci-dessus, met en œuvre un procédé d'estimation de distance P (ci-après « procédé ») représenté sur la figure 5.

Ledit procédé P comprend, comme représenté sur la figure 5, une suite d'étapes E1 à E3 comprenant :

- une étape de détection et d'identification E1, mise en œuvre par l'unité de détection et d'identification 8, consistant à détecter et identifier au moins une cible 4 dans l'image I générée par le générateur d'image 6. L'identification consiste à retrouver dans l'image I au moins une cible 4 correspondant à l'une des cibles faisant partie de la liste de cibles connues contenue dans la base de données 14 ;
- une étape d'estimation d'orientation E2, mise en œuvre par l'unité d'estimation d'orientation 10, consistant à déterminer (ou estimer) l'orientation dans l'image I de la cible 4 identifiée à l'étape de détection et d'identification E1 ; et
- un étape d'estimation de distance E3, mise en œuvre par l'unité d'estimation de distance 12.

Ledit procédé P comprend également, comme représenté sur la figure 5, une étape de transmission d'informations E4, mise en œuvre postérieurement à l'étape d'estimation de distance E3, consistant à transmettre au moins la distance D estimée à au moins un système utilisateur.

L'étape de détection et d'identification E1 comprend :

- une sous-étape de détection E1A, mise en œuvre par l'unité de détection 16, consistant à détecter une cible 4 dans l'image I ; et
- une sous-étape de reconnaissance et d'identification E1B, mise en œuvre par l'unité de reconnaissance et d'identification 17, consistant à attribuer à la cible 4 détectée dans l'image I, une classe de reconnaissance ou une classe d'identification, précisées ci-dessous.

La sous-étape de détection E1A consiste à réaliser l'une des opérations suivantes sur l'image : identifier les pixels du contour de la cible ou les pixels de la cible ou bien générer une boîte englobante englobant la cible.

La sous-étape de détection E1A a pour but de segmenter la cible 4 finement, c'est-à-dire de la distinguer du fond 30 de l'image I (figures 3 et 4).

Pour ce faire, dans un premier mode de réalisation représenté sur la figure 3, la sous-étape de détection E1A identifie les pixels appartenant au contour 23 de la cible 4, comme mis en évidence par un trait épais sur la figure 3.

En outre, dans un second mode de réalisation représenté sur la figure 4, la sous-étape de détection E1A génère une boîte englobante 24, de préférence de forme rectangulaire, qui englobe la cible 4. La boîte englobante 24 est la boîte de surface la plus petite apte à englober complètement la cible 4.

L'étape de détection et d'identification E1 a donc pour but de détecter et localiser, ainsi que d'identifier les cibles de la base de données 14, éventuellement présentes dans l'image I.

Cette étape de détection et d'identification E1 comprend donc deux fonctions (ou sous-étapes) principales, à savoir :

- la sous-étape de détection E1A, dont le but est de segmenter la cible 4 finement dans l'image I, c'est-à-dire de la distinguer du fond 30 de l'image I ; et
- la sous-étape de reconnaissance et d'identification E1B, dont le but est d'attribuer à toute cible 4 (détectée dans l'image I à la sous-étape de détection E1A) une classe de reconnaissance (correspondant à un niveau de connaissance lié à la catégorie de la cible ; par exemple, une voiture que l'on distingue d'un piéton) ou bien une classe d'identification (correspondant à un niveau de connaissance plus précis que la classe de reconnaissance ; par exemple s'il s'agit d'une voiture, la connaissance de son modèle précis).

Dans les deux sous-étapes E1A et E1B, les méthodes envisagées pour remplir les fonctions sont fondées sur des techniques d'apprentissage automatique (« machine learning » en anglais). L'apprentissage automatique utilise des modèles construits au préalable lors d'une phase d'apprentissage. Cette phase d'apprentissage est réalisée hors ligne, c'est-à-dire qu'elle est mise en œuvre une seule fois avant d'utiliser le dispositif 1 dans une seconde phase en ligne (ou de test) sur des images d'observation. Lors de cette phase, un algorithme d'apprentissage construit des modèles utilisés ensuite lors de la phase de test.

On parle de modèles de classification, car ils permettent au dispositif de classer les exemples de cibles extraits de la scène observée :

- dans le cas de la détection, en cibles connues ou inconnues (ou exemple de fond) ; et
- dans le cas de la reconnaissance et de l'identification, en différentes catégorie (ou modèles ou versions) de cibles connues.

Le procédé P comprend au moins une étape d'apprentissage E0A, mise en œuvre antérieurement à l'étape de détection et d'identification E1, consistant à générer les modèles (de classification) enregistrés dans la base de données 14.

L'algorithme d'apprentissage envisagé utilise pour construire les modèles, une base d'images d'exemple, dont la réponse idéale par les modèles de classification (détection et classes de reconnaissance et d'identification) est connue. Les classes sont prédéterminées. On parle de données étiquetées. Une telle technique d'apprentissage utilisant des données étiquetées par un expert est dite d'apprentissage supervisé. La base d'images étiquetées utilisée par l'apprentissage est appelée base de données d'apprentissage. Elle peut potentiellement comprendre un grand nombre d'images.

La figure 6 illustre l'étape d'apprentissage E0A. Plus précisément, à partir d'une base de données d'apprentissage 25, un apprentissage supervisé de modèles de classification de DRI (référence 26) est mis en œuvre de manière à générer les modèles à stocker dans la base de données 14.

A titre d'illustration, on peut citer quelques exemples d'algorithmes à base d'apprentissage supervisé pouvant être utilisés dans l'étape d'apprentissage E0A (figures 5 et 6) :

- des algorithmes de machine à vecteurs de support de type SVM (pour « Support Vector Machine » en anglais), associés à un descripteur visuel, par exemple de type HOG (pour « Histogram of Oriented Gradient » en anglais) ;
- des algorithmes à base de forêt d'arbres décisionnels (forêt aléatoire ou « random forest classifier » en anglais) ;
- des réseaux de neurones à convolution, en particulier d'apprentissage profond (« deep learning » en anglais), qui présentent des solutions permettant de produire par apprentissage des classifieurs.

Par conséquent, les entrées de l'unité de détection et d'identification 8 (mettant en œuvre l'étape de détection et d'identification E1) sont les suivantes :

- une image I numérique d'observation de la scène (contenant la cible 4), dans laquelle on souhaite mesurer la distance d'une ou de plusieurs cibles, image I qui est reçue du générateur d'images 6 par l'intermédiaire de la liaison 9 ; et
- des modèles de DRI de cibles connues, qui ont été obtenus par apprentissage automatique, qui sont contenus dans la base de données 14 et qui sont reçus par l'intermédiaire de la liaison 15.

Les sorties de l'unité de détection et d'identification 8 (mettant en œuvre l'étape de détection et d'identification E1), qui sont transmises à l'unité d'estimation d'orientation 10, sont les suivantes :

- une segmentation de la cible, à savoir les listes des pixels appartenant à la cible ou les listes des pixels appartenant au contour 23 de la cible 4 (figure 3) ou les coordonnées de la boîte englobante 24 de la cible 4 (figure 4) ; et
- un label attribué à la cible 4 à la sous-étape de reconnaissance et d'identification E1B.

L'unité de détection et d'identification 8 fournit donc une segmentation de la cible 4 et son label dans la base de données 14.

Les traitements décrits dans la présente description pour estimer la distance d'une cible 4 identifiée sur une image I peuvent bien entendu être mis en œuvre (de manière similaire à chaque fois) pour estimer les distances de chacune d'une pluralité de cibles, dans le cas où plusieurs cibles (connues) sont identifiées sur l'image I.

Pour des raisons de simplification, on parle de cible 4 pour les figures 3 et 4, étant entendu qu'il s'agit sur ces figures de la représentation dans l'image I de la cible réelle (se trouvant dans la scène de laquelle a été prise l'image I).

Une fois la cible finement localisée dans l'image I et identifiée, le procédé P comprend l'étape d'estimation d'orientation E2 mise en œuvre par l'unité d'estimation d'orientation 10. Afin de connaître la position relative dans l'espace de la cible 4 par rapport au générateur d'images 6, il est nécessaire de savoir sous quel point de vue la cible 4 est observée.

En effet, la seule connaissance des dimensions de la cible 4 n'est pas suffisante pour pouvoir connaître la mesure de la longueur (par exemple en mètre) d'un segment S1, S2, S3 apparent de la cible 4 observée dans l'image I. Il est nécessaire de savoir sous quel point de vue la cible 4 est observée. La solution retenue est d'estimer l'orientation de la cible 4, à savoir l'orientation de la cible 4 dans l'espace dans un repère euclidien. On fait l'hypothèse que la cible 4 n'est pas déformable et qu'elle possède des orientations principales selon trois axes dans l'espace (par exemple hauteur, longueur et largeur d'un pavé droit). L'orientation peut donc être fournie par trois angles.

Pour cela, on estime l'orientation de la cible 4 par comparaison de son observation dans l'image avec des modèles d'estimation d'orientation de cette cible 4 élaborés au préalable et présents dans la base de données 20 (ou dans la base de données 14 dans une variante de réalisation). Ceci peut être réalisé en utilisant par exemple des modèles 3D de la cible ou via des techniques d'estimation d'orientation fondées sur une régression non linéaire.

Dans un premier mode de réalisation, l'étape d'estimation d'orientation E2 consiste à comparer la cible 4 à des modèles de cibles connus (à orientation définie), enregistrés dans la base de données 20.

En outre, dans un second mode de réalisation, l'étape d'estimation d'orientation E2 consiste à mettre en œuvre une méthode d'estimation fondée sur une régression non linéaire à partir de données (fonction) enregistrées dans la base de données 20 (ou dans la base de données 14 dans une variante de réalisation).

Dans ce second mode de réalisation, le procédé P comprend au moins une étape d'apprentissage E0B, mise en œuvre antérieurement à l'étape de détection et d'identification E1, consistant à générer ladite régression non linéaire enregistrée dans la base de données 20.

La figure 7 illustre l'étape d'apprentissage E0B.

Plus précisément, à partir d'une base de données d'apprentissage 27, un apprentissage supervisé de modèles d'estimation d'orientation (référence 28) est mis en œuvre de manière à générer les modèles d'estimation d'orientation à stocker dans la base de données 20.

L'estimation d'orientation peut donc être réalisée en utilisant :

- des modèles 3D de cibles connues ; ou
- des techniques d'estimation d'orientation fondées sur une régression non linéaire obtenue par apprentissage supervisé. On peut utiliser à cet effet, par exemple, les algorithmes décrits ci-dessus (SVM, réseau de neurones, ...). Ces algorithmes sont utilisés sous les mêmes modalités que précédemment, excepté que le produit de l'apprentissage n'est pas un classifieur mais une fonction continue qui associe une estimation d'orientation (trois valeurs d'angle) de la cible à l'image de la cible.

Par ailleurs, l'étape d'estimation de distance E3 qui suit comprend une sous-étape de mesure E3A, mise en œuvre par l'élément de mesure 18, consistant à mesurer sur l'image I la longueur I1 d'un segment caractéristique S1 de la cible 4, comme montré sur la figure 3. Le segment caractéristique S1 représente, dans ce cas, la longueur de l'ensemble des roues de la chenille du char 5 (ou l'empattement du char), tel que représenté sur l'image I.

Dans le cadre de la présente invention, le segment caractéristique peut correspondre à tout segment facilement reconnaissable sur la cible 4, et dont on connaît la longueur réelle sur la cible 4, à savoir la longueur L1 pour le segment S1 (figure 2).

Dans le cas où une boîte englobante 24 est définie, comme dans l'exemple de la figure 4, le segment caractéristique peut correspondre à la longueur de la boîte englobante 24 (comme le segment caractéristique S2) ou à la largeur boîte englobante 24 (comme le segment caractéristique S3).

L'étape d'estimation de distance E3 comprend également une sous-étape de calcul E3B consistant à calculer la distance D à partir de ladite longueur I1 mesurée, d'une longueur réelle L1 connue du segment caractéristique S1 sur la cible 4 en tenant compte de l'orientation de la cible 4 et de la résolution spatiale du générateur d'images 6.

Dans un mode de réalisation préféré, la sous-étape de calcul E3B, mise en œuvre par l'élément de calcul 19, consiste à calculer la distance D entre la position P1 de l'observateur 2 et la position P2 de la cible 4 (figure 2) à l'aide de l'expression suivante :

$$D = dm/(dp.\theta)$$

dans laquelle (figure 8) :

- dm représente une longueur apparente (en mètres) du segment caractéristique S1, S2, S3 correspondant à la longueur réelle de ce segment caractéristique S1, S2, S3 en tenant compte de l'orientation de la cible 4 ;
- dp représente la longueur mesurée (en pixels) sur l'image I du segment caractéristique S1, S2, S3, par exemple la longueur I1 mesurée du segment S1 ; et
- $\theta$ représente la résolution spatiale du générateur d'images 6, à quel angle de vue dans la réalité correspond la longueur d'un pixel dans l'image.

Comme représenté sur la figure 8, la distance D vérifie la relation suivante :

$$D = \frac{dm/2}{\tan(\frac{\beta}{2})}$$

D est donc sensiblement égal à $dm/\beta$.

Comme de plus, $\beta = dp.\theta$, on obtient l'équation précitée :

$$D = dm/(dp.\theta)$$

D'une part, la connaissance de la géométrie de la cible 4 et de son orientation relative par rapport au générateur d'images 6 permet de connaître la mesure (en mètres) dans la scène d'un segment S1, S2, S3 apparent de la cible 4 dans l'image I, par exemple le plus grand segment inscrit dans la surface apparente de la cible observée. D'autre part, on peut fournir une mesure (en pixels) dans l'image I de ce même segment S1, S2, S3. Connaissant la résolution spatiale $\theta$, cette dernière fournit directement l'angle apparent selon lequel on observe ce segment. On cherche donc finalement à connaître la longueur $D$ d'un côté d'un triangle, dont on connaît déjà la longueur d'un autre côté ($dm/2$) et l'un des angles ($\beta/2$), comme présenté sur la figure 8.

Par ailleurs, dans un premier mode de réalisation, l'étape de détection et d'identification E1 et l'étape d'estimation d'orientation E2 sont deux étapes séparées, mises en œuvre successivement, comme représenté sur la figure 5, tandis que, dans un second mode de réalisation, les étapes d'identification et d'orientation sont mises en œuvre en une seule et même étape (dite d'identification et d'orientation).

Le procédé P, tel que décrit ci-dessus, peut être mis en œuvre de deux façons différentes.

Dans un premier mode de réalisation, il est mis en œuvre de façon entièrement automatique.

Dans un second mode de réalisation, l'étape de détection et d'identification E1 et l'étape d'estimation d'orientation E2 sont mises en œuvre de façon semi-automatique (avec une intervention d'un opérateur). Dans ce cas, l'opérateur impose ou corrige la segmentation et/ou l'identification de la cible. De plus, l'étape d'estimation de distance E3 est, quant à elle, mise en œuvre de façon automatique.

Le procédé P comprend également au moins une étape de génération d'image E0C, mise en œuvre antérieurement à l'étape de détection et d'identification E1, consistant à générer au moins une image I à l'aide du générateur d'images 6 à partir de la position P1 de l'observateur 2.

Dans un mode de réalisation particulier, le dispositif 1 comporte des éléments de calcul de distance supplémentaires (non représentés) reposant sur plusieurs techniques utilisées en parallèle. Le résultat généré (distance estimée) est obtenu, dans ce mode de réalisation, à partir d'une combinaison (moyenne, ...) des résultats de ces différentes techniques. On peut ainsi mettre à profit la complémentarité des différentes techniques pour améliorer la robustesse et la précision globale de l'estimation de la distance.

Le procédé P permet donc d'estimer la distance D entre une cible 4 observée dans une image numérique I et le générateur d'images 6 (qui a généré cette image numérique I) qui est caractérisé géométriquement (calibré). Plus particulièrement, la chaîne de traitement mise en œuvre par le procédé P permet une mesure de distance entre la cible observée connue et l'observateur, à partir d'une seule image (une seule caméra, à un instant donné) et sans émissions électromagnétiques destinées à illuminer la cible (système passif).

Le procédé P permet d'estimer, de façon automatique et sans contact, la distance séparant une cible et son observateur sans que ce dernier n'ait à se déplacer, au moyen d'un système optique (générateur d'images 6) passif.

En résumé, le procédé P se limite à la mesure de la distance entre l'observateur 2 et un ensemble de cibles 4 connues au préalable et caractérisées géométriquement. On dispose pour cela d'une base de données de cibles, dont on connaît notamment les dimensions, et on cherche à mesurer la distance D entre l'observateur 2 et ces cibles 4 lorsqu'on les observe dans une image I numérique issue du générateur d'images 6 utilisé. Le générateur d'images 6 est calibré. Plus particulièrement, sa résolution spatiale est connue. Lorsque l'image I d'observation est générée, elle est soumise à une chaîne de traitement (procédé P), présentant trois étapes principales. Le principe du procédé P est de mettre en regard la dimension (ou longueur) mesurée en mètres dans la scène, et en pixels dans l'image, puis de produire une estimation de la distance qui est liée à ces deux grandeurs via la résolution spatiale du générateur d'images 6.

Le procédé P (d'estimation de distance), tel que décrit ci-dessus, présente notamment les avantages suivants :

- il est passif et nécessite uniquement un générateur d'images (ou imageur) qui est calibré et au moins une base de données 14 contenant des cibles observées ;

- il propose une solution passive, non détectable (furtive) à la différence des solutions actives ;
- il est simple à mettre en œuvre ;
- il n'a pas besoin d'un matériel particulièrement spécifique. Il utilise un dispositif matériel monoculaire (à un seul imageur) à la fois peu encombrant, peu coûteux, relativement simple et non spécialisé ; et
- il réalise la mesure de distance au moyen de traitements d'images automatiques fondés principalement sur des aspects géométriques et n'ayant pas besoin d'un modèle complexe de transmission atmosphérique. Sa mise en œuvre ne nécessite donc pas de connaissance d'un modèle d'absorption atmosphérique.

**Revendications**

1. Procédé d'estimation de distance entre une position d'un observateur et une cible, à l'aide d'au moins une image (I) générée par un générateur d'images (6) numérique à partir de la position (P1) de l'observateur (2), le procédé comportant une suite d'étapes comprenant :

    - une étape de détection et d'identification (E1) consistant à détecter et identifier au moins une cible (4) dans l'image (I), à partir au moins d'une liste de cibles connues, l'étape de détection et d'identification (E1) comprend :

        - une sous-étape de détection (E1A) consistant à détecter au moins une cible (4) dans l'image (I) ; et
        - une sous-étape de reconnaissance et d'identification (E1B) consistant à attribuer à la cible (4) détectée une classe ;

    - une étape d'estimation d'orientation (E2) consistant à déterminer l'orientation de la cible (4) identifiée dans l'image (I) par comparaison de son observation dans l'image avec des modèles d'estimation d'orientation de cette cible (4) élaborés au préalable, et présents dans une base de données (14, 20) ; et
    - une étape d'estimation de distance (E3), l'étape d'estimation de distance (E3) comprenant :

        • une sous-étape de mesure (E3A) consistant à mesurer sur l'image (I) la longueur dp (11) d'au moins un segment caractéristique (S1, S2, S3) de la cible (4),
        • la détermination d'une longueur apparente dm du segment caractéristique (S1, S2, S3), correspondant à la longueur réelle (L1) du segment caractéristique (S1, S2, S3) en tenant compte de la géométrie et de l'orientation de la cible (4) par rapport au générateur d'images (6), déterminée à l'étape d'estimation d'orientation (E2) ; et
• une sous-étape de calcul (E3B) consistant à calculer la distance *D* entre la position (P1) de l'observateur (2) et la cible (4), à l'aide de l'expression suivante :

$$D = dm/(dp.\theta)$$

dans laquelle $\theta$ représente la résolution spatiale du générateur d'images (6), à quel angle de vue dans la réalité correspond la longueur d'un pixel dans l'image.

2. Procédé selon la revendication 1, **caractérisé en ce que** la sous-étape de détection (E1A) consiste à réaliser l'une des opérations suivantes sur l'image (I) : identifier des pixels de la cible (4), identifier des pixels d'un contour (23) de la cible (4), générer une boîte englobante (24) englobant la cible (4).

3. Procédé selon l'une des revendications 1 et 2, **caractérisé en ce que** la classe attribuée à la cible (4) détectée est une des classes suivantes :

   - une classe dite de reconnaissance correspondant à un niveau de connaissance lié à la catégorie de la cible (4) ; et
   - une classe dite d'identification représentant un niveau de connaissance plus précis que la classe de reconnaissance et correspondant à la connaissance du modèle de la cible (4).

4. Procédé selon l'une quelconque des revendications précédentes, **caractérisé en ce que** l'étape de détection et d'identification (E1) met en œuvre un apprentissage automatique utilisant des modèles de classification.

5. Procédé selon la revendication 4, **caractérisé en ce qu'**il comprend au moins une première étape d'apprentissage (E0A), mise en œuvre antérieurement à l'étape de détection et d'identification (E1), consistant à générer lesdits modèles de classification.

6. Procédé selon l'une quelconque des revendications 1 à 5, **caractérisé en ce que** l'étape d'estimation d'orientation (E2) consiste à comparer la cible à des modèles de cible connus.

7. Procédé selon l'une quelconque des revendications 1 à 5, **caractérisé en ce que** l'étape d'estimation d'orientation (E2) consiste à mettre en œuvre une méthode d'estimation fondée sur une régression non linéaire.

8. Procédé selon la revendication 7, **caractérisé en ce qu'**il comprend au moins une seconde étape d'apprentissage (E0B), mise en œuvre antérieurement à l'étape d'estimation d'orientation (E2), consistant à générer au moins un modèle régression non linéaire.

9. Procédé selon l'une des revendications 5 et 8, **caractérisé en ce qu'**au moins l'une desdites première et seconde étapes d'apprentissage (E0A, E0B) met en œuvre l'un des algorithmes suivants :

   - au moins un algorithme de machine à vecteurs de support ;
   - au moins un algorithme à base de forêt d'arbres décisionnels ;
   - au moins un réseau de neurones à convolution.

10. Procédé selon l'une quelconque des revendications précédentes, **caractérisé en ce qu'**il comprend, de plus, au moins l'une des étapes suivantes :

    - une étape de génération d'image (E0C), mise en œuvre antérieurement à l'étape de détection et d'identification (E1), consistant à générer au moins une image (I) à l'aide du générateur d'images (6) à partir de la position (P1) de l'observateur (2) ;
    - une étape de transmission d'informations (E4), mise en œuvre postérieurement à l'étape d'estimation de distance (E3), consistant à transmettre au moins la distance (D) estimée à au moins un système utilisateur.

11. Procédé selon l'une quelconque des revendications précédentes, **caractérisé en ce que** l'étape de détection et d'identification (E1) et l'étape d'estimation d'orientation (E2) sont mises en œuvre en une seule et même étape.

12. Procédé selon l'une quelconque des revendications 1 à 11, **caractérisé en ce qu'**il est mis en œuvre de façon automatique.

13. Procédé selon l'une quelconque des revendications 1 à 11, **caractérisé en ce que** l'étape de détection et d'identification (E1) et l'étape d'estimation d'orientation (E2) sont mises en œuvre de façon semi-automatique, et **en ce que** l'étape d'estimation de distance (E3) est mise en œuvre de façon automatique.

14. Dispositif d'estimation de distance entre une position d'un observateur et une cible, à l'aide d'au moins une image (I) générée par un générateur d'images (6) numérique à partir de la position (P1) de l'observateur (2),

**caractérisé en ce qu'**il comporte :

- une unité de détection et d'identification (8) configurée pour détecter et identifier au moins une cible (4) dans l'image (I), à partir au moins d'une liste de cibles connues, en détectant au moins une cible (4) dans l'image (I) et en attribuant à la cible (4) détectée une classe ;
- une unité d'estimation d'orientation (10) configurée pour déterminer l'orientation de la cible (4) identifiée dans l'image (I) par comparaison de son observation dans l'image avec des modèles d'estimation d'orientation de cette cible (4) élaborés au préalable, et présents dans une base de données (14, 20) ; et
- une unité d'estimation de distance (12) configurée pour mesurer sur l'image (I) la longueur (11) d'au moins un segment caractéristique (S1, S2, S3) de la cible (4), et pour calculer la distance $D$ entre la position (P1) de l'observateur (2) et la cible (4) à l'aide de l'expression suivante :

$$D = dm/(dp.\theta)$$

dans laquelle :

- $dm$ représente une longueur apparente du segment caractéristique (S1, S2, S3), correspondant à la longueur réelle (L1) du segment caractéristique (S1, S2, S3) en tenant compte de la géométrie et de l'orientation de la cible (4) ;
- $dp$ représente la longueur (11) mesurée sur l'image (I) du segment caractéristique (S1, S2, S3) ; et
- $\theta$ représente la résolution spatiale du générateur d'images (6), à quel angle de vue dans la réalité correspond la longueur d'un pixel dans l'image.

15. Dispositif selon la revendication 14,
**caractérisé en ce qu'**il comporte, de plus, au moins l'un des éléments suivants :

- au moins une base de données (14, 20) prédéterminée contenant au moins ladite liste de cibles connues ;
- le générateur d'images (6) numérique configuré pour générer au moins une image (I) à partir de la position (P1) de l'observateur (2) ;
- une unité de transmission d'informations configurée pour transmettre au moins la distance (D) estimée à au moins un système utilisateur.

**Patentansprüche**

1. Verfahren zur Abschätzung eines Abstands zwischen einer Position eines Beobachters und einem Ziel mithilfe mindestens eines durch einen numerischen Bildgenerator (6), ausgehend von der Position (P1) des Beobachters (2), erzeugten Bilds (I), wobei das Verfahren eine Abfolge von Schritten umfasst, umfassend:

- einen Schritt der Detektion und der Identifikation (E1), der aus dem Detektieren und Identifizieren mindestens eines Ziels (4) in dem Bild (I) besteht, ausgehend von mindestens einer Liste von bekannten Zielen, wobei der Schritt der Detektion und der Identifikation (E1) umfasst:

- einen Teilschritt der Detektion (E1A), der aus dem Detektieren mindestens eines Ziels (4) in dem Bild (I) besteht; und
- einen Teilschritt der Erkennung und Identifikation (E1B), der aus dem Zuweisen einer Klasse zu dem detektierten Ziel (4) besteht;

- einen Schritt der Abschätzung der Orientierung (E2), der aus dem Bestimmen der Orientierung des in dem Bild (I) identifizierten Ziels (4) durch den Vergleich seiner Beobachtung in dem Bild mit Abschätzungsmodellen der Orientierung dieses Ziels (4), die zuvor entwickelt wurden und in einer Datenbank (14, 20) vorhanden sind, besteht; und
- einen Schritt zur Abschätzung des Abstands (E3), wobei der Schritt zur Abschätzung des Abstands (E3) umfasst:

- einen Teilschritt des Messens (E3A), der aus dem Messen der Länge dp (11) von mindestens einem charakteristischen Segment (S1, S2, S3) des Ziels (4) auf dem Bild (I) besteht,
- die Bestimmung einer scheinbaren Länge $dm$ des charakteristischen Segments (S1, S2, S3), das der realen Länge (L1) des charakteristischen Segments (S1, S2, S3) entspricht, die unter Berücksichtigung der Geometrie und der Orientierung des Ziels (4) in Bezug auf den Bildgenerator (6), die bei dem Schritt zur Abschätzung der Orientierung (E2) bestimmt wurde; und
- einen Teilschritt der Berechnung (E3B), der aus dem Berechnen des Abstands $D$ zwischen der Position (P1) des Beobachters (2) und des Ziels (4) mithilfe des folgenden Ausdrucks besteht:

$$D = dm/(dp.\theta)$$

wobei $\vartheta$ die räumliche Auflösung des Bildgenerators (6) darstellt, bei welcher der Blickwinkel in der Realität der Länge eines Pixels in dem Bild entspricht.

2. Verfahren nach Anspruch 1,
**dadurch gekennzeichnet, dass** der Teilschritt der Detektion (E1A) aus dem Ausführen eines der folgenden Vorgänge an dem Bild (I) besteht: Identifizieren von Pixeln des Ziels (4), Identifizieren von Pixeln einer Kontur (23) des Ziels (4), Erzeugen einer Hüllbox (24), die das Ziel (4) umschließt.

3. Verfahren nach einem der Ansprüche 1 und 2,
**dadurch gekennzeichnet, dass** die dem detektierten Ziel (4) zugewiesene Klasse eine der folgenden Klassen ist:

   - eine sogenannte Erkennungsklasse, die einem Niveau der Kenntnis entspricht, die mit der Kategorie des Ziels (4) verbunden ist; und
   - eine sogenannte Identifikationsklasse, die ein präziseres Niveau der Kenntnis darstellt als die Erkennungsklasse und der Kenntnis des Modells des Ziels (4) entspricht.

4. Verfahren nach einem der vorstehenden Ansprüche,
**dadurch gekennzeichnet, dass** der Schritt der Detektion und der Identifikation (E1) einen automatischen Lernprozess durchführt, der Klassifikationsmodelle verwendet.

5. Verfahren nach Anspruch 4,
**dadurch gekennzeichnet, dass** es mindestens einen ersten Lernprozessschritt (E0A) umfasst, der vor dem Schritt der Detektion und Identifikation (E1) durchgeführt wird, der aus dem Erzeugen der Klassifikationsmodelle besteht.

6. Verfahren nach einem der Ansprüche 1 bis 5,
**dadurch gekennzeichnet, dass** der Schritt der Abschätzung der Orientierung (E2) aus dem Vergleichen des Ziels mit Modellen bekannter Ziele besteht.

7. Verfahren nach einem der Ansprüche 1 bis 5,
**dadurch gekennzeichnet, dass** der Schritt der Abschätzung der Orientierung (E2) aus dem Durchführen einer Methode zur Abschätzung besteht, die auf einer nicht linearen Regression gründet.

8. Verfahren nach Anspruch 7,
**dadurch gekennzeichnet, dass** es mindestens einen zweiten Lernprozessschritt (E0B) umfasst, der vor dem Schritt der Abschätzung der Orientierung (E2) durchgeführt wird, der aus dem Erzeugen mindestens eines nicht linearen Modells besteht.

9. Verfahren nach einem der Ansprüche 5 und 8,
**dadurch gekennzeichnet, dass** mindestens einer des ersten und zweiten Lernprozessschritts (E0A, E0B) einen der folgenden Algorithmen durchführt:

   - mindestens einen Support-Vector-Machine-Algorithmus;
   - mindestens einen Algorithmus auf Random-Forest-Basis;
   - mindestens ein neuronales Faltungsnetzwerk.

10. Verfahren nach einem der vorstehenden Ansprüche,
**dadurch gekennzeichnet, dass** es zudem mindestens einen der folgenden Schritte umfasst:

   - einen Bilderzeugungsschritt (E0C), der vor dem Schritt der Detektion und Identifikation (E1) durchgeführt wird, der aus dem Erzeugen mindestens eines Bilds (I) mithilfe des Bildgenerators (6), ausgehend von der Position (P1) des Beobachters (2), besteht;
   - einen Schritt der Übertragung von Informationen (E4), der nach dem Schritt der Abschätzung des Abstands (E3) durchgeführt wird, der aus dem Übertragen mindestens des Abstands (D) besteht, der an mindestens einem Anwendersystem abgeschätzt wird.

11. Verfahren nach einem der vorstehenden Ansprüche,
**dadurch gekennzeichnet, dass** der Schritt der Detektion und Identifikation (E1) und der Schritt der Abschätzung der Orientierung (E2) in einem einzelnen und gleichen Schritt durchgeführt werden.

12. Verfahren nach einem der Ansprüche 1 bis 11,
**dadurch gekennzeichnet, dass** es auf automatische Weise durchgeführt wird.

13. Verfahren nach einem der Ansprüche 1 bis 11,
**dadurch gekennzeichnet, dass** der Schritt der Detektion und Identifikation (E1) und der Schritt der Abschätzung der Orientierung (E2) auf halbautomatische Weise durchgeführt werden, und dadurch, dass der Schritt der Abschätzung des Abstands (E3) auf automatische Weise durchgeführt wird.

14. Vorrichtung zur Abschätzung eines Abstands zwischen einer Position eines Beobachters und einem Ziel mithilfe mindestens eines durch einen numerischen Bildgenerator (6), ausgehend von der Position (P1) des Beobachters (2), erzeugten Bilds (I)
**dadurch gekennzeichnet, dass** sie umfasst:

   - eine Einheit zur Detektion und Identifikation (8), die zum Detektieren und Identifizieren mindestens eines Ziels (4) in dem Bild (I), ausgehend von mindestens einer Liste bekannter Ziele, konfiguriert ist, indem mindestens ein Ziel (4) in dem Bild (I) detektiert wird und indem dem detektierten Ziel (4) eine Klasse zugewiesen wird;

- eine Einheit zur Abschätzung der Orientierung (10), die zum Bestimmen der Orientierung des in dem Bild (I) identifizierten Ziels (4), durch den Vergleich seiner Beobachtung in dem Bild mit Abschätzungsmodellen der Orientierung dieses Ziels (4), die zuvor entwickelt wurden und in einer Datenbank (14, 20) vorhanden sind, konfiguriert ist; und

- eine Einheit zur Abschätzung eines Abstands (12), die konfiguriert ist, um auf dem Bild (I) die Länge (11) mindestens eines charakteristischen Segments (S1, S2, S3) des Ziels (4) zu messen, und um den Abstand *D* zwischen der Position (P1) des Beobachters (2) und des Ziels (4) mithilfe des folgenden Ausdrucks zu berechnen:

$$D = dm/(dp.\theta)$$

wobei:

- *dm* eine scheinbare Länge des charakteristischen Segments (S1, S2, S3) darstellt, das unter Berücksichtigung der Geometrie und der Orientierung des Ziels (4) der realen Länge (L1) des charakteristischen Segments (S1, S2, S3) entspricht;
- *dp* die auf dem Bild (I) des charakteristischen Segments (S1, S2, S3) gemessene Länge (l1) darstellt; und
- $\theta$ die räumliche Auflösung des Bildgenerators (6) darstellt, bei welcher der Blickwinkel in der Realität der Länge eines Pixels in dem Bild entspricht.

**15.** Vorrichtung nach Anspruch 14,
**dadurch gekennzeichnet, dass** sie zudem mindestens eines der folgenden Elemente umfasst:

- mindestens eine vorher festgelegte Datenbank (14, 20), die mindestens die Liste bekannter Ziele enthält;
- den numerischen Bildgenerator (6), der zum Erzeugen mindestens eines Bilds (I) ausgehend von der Position (P1) des Beobachters (2) konfiguriert ist;
- eine Einheit zur Übertragung von Informationen, die zum Übertragen mindestens des an mindestens einem Anwendersystem abgeschätzten Abstands (D) konfiguriert ist.

**Claims**

**1.** A method for estimating the distance between a position of an observer and a target, using at least one image (I) generated by a digital image generator (6) from the position (P1) of the observer (2), the method comprising a sequence of steps comprising:

- a detection and identification step (E1) consisting in detecting and identifying at least one target (4) in the image (I), from at least one list of known targets, the detection and identification step (E1) comprising:

• a detection sub-step (E1A) consisting in detecting at least one target (4) in the image (I); and
• a recognition and identification sub-step (E1B) consisting in assigning a class to the detected target (4);

- an orientation estimation step (E2) consisting in determining the orientation of the target (4) identified in the image (I) by comparing its observation in the image with orientation estimation models of this target (4) previously elaborated and present in the database (14, 20); and
- a distance estimation step (E3), the distance estimation step (E3) comprising:

• a measurement sub-step (E3A) consisting of measuring, on the image (I), the length dp (11) of at least one characteristic segment (S1, S2, S3) of the target (4);
• the determination of an apparent length *dm* of the characteristic segment (S1, S2, S3), corresponding to the actual length (L1) of the characteristic segment (S1, S2, S3) taking into account the geometry and the orientation of the target (4) with respect to the image generator (6), determined in the orientation estimation step (E2); and
• a calculation sub-step (E3B) consisting in calculating the distance (D) between the position (P1) of the observer (2) and the target (4) using the following expression:

$$D = dm/(dp.\theta)$$

in which $\theta$ represents the spatial resolution of the image generator (6), to which angle of view in the reality corresponds the length of a pixel in the image.

**2.** The method according to claim 1,
**characterized in that** the detection sub-step (E1A) consists in performing one of the following operations on the image (I): identifying pixels of the target (4), identifying pixels of an outline (23) of the target (4), generating a bounding box (24) encompassing the target (4).

3. The method according to any of claims 1 and 2, **characterized in that** the class assigned to the detected target (4) is one of the following classes:

   - a recognition class corresponding to a level of knowledge linked to the category of the target (4); and
   - an identification class representing a level of knowledge more precise than the recognition class and corresponding to the knowledge of the model of the target (4).

4. The method according to any one of the preceding claims, **characterized in that** the detection and identification step (E1) implements a machine learning using classification models.

5. The method according to claim 4, **characterized in that** it comprises at least a first learning step (E0A), implemented prior to the detection and identification step (E1), consisting in generating said classification models.

6. The method according to any one of claims 1 to 5, **characterized in that** the orientation estimation step (E2) consists in comparing the target with known target models.

7. The method according to any one of claims 1 to 5, **characterized in that** the orientation estimation step (E2) consists in implementing an estimation method based on a non-linear regression.

8. The method according to claim 7, **characterized in that** it comprises at least one second learning step (E0B), implemented prior to the orientation estimation step (E2), consisting in generating at least one non-linear regression model.

9. The method according to any of claims 5 and 8, **characterized in that** at least one of said first and second learning steps (E0A, E0B) implements one of the following algorithms:

   - at least one support vector machine algorithm;
   - at least one algorithm based on a decision tree forest;
   - at least one convolutional neural network.

10. The method according to any one of the preceding claims, **characterized in that** it further comprises at least one of the following steps:

    - an image generation step (E0C), implemented prior to the detection and identification step (E1), consisting in generating at least one image (I) using the image generator (6) from the position (P1) of the observer (2);
    - an information transmission step (E4), implemented after the distance estimation step (E3), consisting in transmitting at least the estimated distance (D) to at least one user system.

11. The method according to any one of the preceding claims, **characterized in that** the detection and identification step (E1) and the orientation estimation step (E2) are implemented in a single step.

12. The method according to any one of claims 1 to 11, **characterized in that** it is implemented automatically.

13. The method according to any one of claims 1 to 11, **characterized in that** the detection and identification step (E1) and the orientation estimation step (E2) are implemented semi-automatically, and **in that** the distance estimation step (E3) is implemented automatically.

14. A device for estimating the distance between a position of an observer and a target, using at least one image (I) generated by a digital image generator (6) from the position (P1) of the observer (2), **characterized in that** it comprises:

    - a detection and identification unit (8) configured to detect and identify at least one target (4) in the image (I), from at least one list of known targets, by detecting at least one target (4) in the image (I) and by assigning a class to the detected target (4);
    - an orientation estimation unit (10) configured to determine the orientation of the target (4) identified in the image (I) by comparing its observation in the image with orientation estimation models of this target (4) previously elaborated and present in the database (14, 20); and
    - a distance estimation unit (12) configured to measure, in the image (I), the length (11) of at least one characteristic segment (S1, S2, S3) of the target (4), and to calculate the distance (D) between the position (P1) of the observer (2) and the target (4) using the following expression:

    $$D = dm/(dp.\theta)$$

    in which:

    - *dm* represents an apparent length of the characteristic segment (S1, S2, S3), corresponding to the actual length (L1) of the characteristic segment (S1, S2, S3) taking into account the geometry and the orientation of the target (4);
- *dp* represents the length (11) measured on the image (I) of the characteristic segment (S1, S2, S3); and
- $\theta$ represents the spatial resolution of the image generator (6), to which angle of view in the reality corresponds the length of a pixel in the image.

15. The device according to claim 14, **characterized in that** it further comprises at least one of the following elements:

- at least one predetermined database (14, 20) containing at least said list of known targets;
- the digital image generator (6) configured to generate at least one image (I) from the position (P1) of the observer (2);
- an information transmission unit configured to transmit at least the estimated distance (D) to at least one user system.

Fig. 1

Fig. 2

Fig. 3

Fig. 4

Fig. 5

Fig. 6

Fig. 7

Fig. 8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2019005681 A

**Littérature non-brevet citée dans la description**

- 3D Bounding Box Estimation Using Deep Learning and Geometry. **DE ARSALAN MOUSAVIAN et al.** ARXIV.ORG. CORNELL UNIVERSITY LIBRARY, 01 December 2016

- Deep MANTA : A Coarse-to-fine Many Task Network for joint 2D and 3D vehicle analysis from monacular image. **FLORIAN CHABOT et al.** ARXIV.ORG. CORNELL UNIVERSITY LIBRARY, 22 March 2017